# EUROPÄISCHE PATENTSCHRIFT

(11) **EP 1 051 445 B1**
(45) Veröffentlichungstag und Bekanntmachung des Hinweises auf die Patenterteilung: **19.05.2004**
(21) Anmeldenummer: 98965682.2
(22) Anmeldetag: 20.11.1998
(51) Int. Cl.: C08L 69/00

(54) **POLYCARBONATFORMMASSEN**
POLYCARBONATE MOULDING MATERIALS
MATIERES MOULABLES EN POLYCARBONATE

(30) Priorität: 03.12.1997 DE 19753542
(43) Veröffentlichungstag der Anmeldung: 15.11.2000
(73) Patentinhaber: BASF AKTIENGESELLSCHAFT, 67056 Ludwigshafen (DE)
(72) Erfinder: WEBER, Martin, D-67487 Maikammer (DE); FRITZSCHE, Thomas, D-67069 Ludwigshafen (DE); KNOLL, Manfred, D-67591 Wachenheim (DE); HOPFENSPIRGER, Xaver, D-67454 Ha loch (DE)
(86) Internationale Anmeldenummer: PCT/EP1998/007461
(87) Internationale Veröffentlichungsnummer: WO 1999/028385

(56) Entgegenhaltungen:
- EP-A- 0 256 461
- EP-A- 0 483 628
- EP-A- 0 522 397
- EP-A- 0 576 950
- EP-A- 0 791 606

## Beschreibung

Die vorliegende Erfindung betrifft Formmassen, die
A) mindestens ein Polycarbonat,
B) mindestens ein Pfropfpolymerisat auf Basis eines Elastomeren mit einer Glasübergangstemperatur von unter 10°C,
C) mindestens ein Copolymerisat, enthaltend vinylaromatische Monomere,
D) mindestens einen Füllstoff,
   sowie gewünschtenfalls darüberhinaus
E) mindestens ein Flammschutzmittel und
F) mindestens ein Additiv,
   enthalten und sich dadurch auszeichnen, daß sie als weitere Komponenten
G) mindestens eine Säure, ausgewählt aus der Gruppe Palmitinsäure, Stearinsäure, Benzoesäure, Isophthalsäure, Terephthalsäure, Trimellithsäure, para-Toluolsulfonsäure, Fumarsäure, Zitronensäure, Mandelsäure oder Weinsäure und darüberhinaus gewünschtenfalls
H) mindestens ein Polyalkylacrylat
   enthalten und daß die Komponente D mindestens ein teilchenförmiger Füllstoff ist, von dem mindestens 95 Gew.-% aller Teilchen einen Durchmesser (größte Ausdehnung) von weniger als 45 µm aufweisen und deren Aspektverhältnis im Bereich von 2 bis 20 liegt.

Darüber hinaus betrifft die vorliegende Erfindung die Verwendung der Formmassen zum Herstellen von Formteilen, Folien oder Fasern sowie die daraus hergestellten Formteile.

Füllstoffhaltige Polycarbonatformmassen, die Pfropfpolymerisate auf der Basis von Dienen (ABS) oder Acrylaten (ASA) und Styrolcopolymerisate enthalten, sind bekannt. Bekannt ist ferner, daß sie mit diversen Flammschutzmitteln ausgerüstet sein können. Derartige Formmassen kommen vornehmlich bei der Herstellung von Formteilen beispielsweise für den Automobilsektor zum Einsatz.

Füllstoffhaltige Formmassen auf der Basis von Polycarbonat und funktionalisiertem ASA, die Oxazolingruppen enthaltende Styrolcopolymerisate aufweisen, sind der DE-A1-196 06 198 zu entnehmen. Sie zeichnen sich durch gute Festigkeiten, Reißdehungswerte und Schlagzähigkeiten aus. Allerdings ist die Tieftemperaturschädigungsarbeit solcher Formmassen nicht ausreichend.

In der WO 96/06136 und der EP-B1-391 413 werden Polycarbonatformmassen beschrieben, die mit Talk eines Aspektverhältnisses von 4 bis 40 bzw. 4 bis 24 und einer Teilchengröße von weniger als 44 bzw. weniger als 10 µm gefüllt sind, weshalb sich die daraus hergestellten Teile weniger verziehen und gute Schlagzähigkeiten aufweisen. Gemäß der erstgenannten Schrift sollte das in den Formmassen enthaltene Copolymerisat ein möglichst hohes Molekulargewicht haben. Nachteil der genannten Formmassen ist, daß sie nicht gut fließen und sich nur schlecht verarbeiten lassen. Des weiteren haben sie den Nachteil, daß die Kerbschlagzähigkeit für viele Anwendungen unzureichend ist.

In der EP-A1-522 397 werden Polycarbonatformmassen offenbart, die, werden sie beflammt, sich nicht verformen und nicht flammend abtropfen. Sie können dadurch erhalten werden, daß ihre Komponenten mit Aramiden und Sulfonsäuresalzen gemischt werden. Dies hat den Nachteil, daß die Zähigkeit entsprechender Formmassen erheblich reduziert wird.

Aus der DE-A1-40 34 336 waren Polycarbonatformmassen bekannt, in denen als Antitropfmittel anstelle von Polytetrafluorethylen peroder polyfluorierte Alkansulfonsäure- oder Carbonsäurederivate eingesetzt wurden. Die dort beschriebenen Formmassen weisen zwar erhöhte Zähigkeiten im Durchstoßtest bei tiefen Temperaturen und geringere Gesamtbrennzeiten auf, genügen aber zum einen nicht den heutigen Anforderungen hinsichtlich Halogenfreiheit und weisen zum anderen relativ niedrige Wärmeformbeständigkeiten auf.

In der EP-A1-576 948 wird vorgeschlagen, basische Verunreinigungen, die das Polycarbonat abbauen können und die insbesondere über recycliertes ABS in die Formmassen eingeschleppt werden, dadurch zu neutralisieren, daß Polymerharze mit Säuregruppen zugegeben werden. Als solche werden Poly(meth)acrylsäure oder teilverseifte Poly(meth)acrylate genannt. Deren Molekulargewichte (Gewichtsmittelwert M_{w}) betragen bevorzugt bis zu 500 000 g/mol. Diese Formmassen sind für viele Anwendungen nicht schlagzäh und reißfest genug.

Um den Polycarbonatabbau gering zu halten, werden gemäß der JP-A 9/137054 Formmassen mit neutralem Talk gefüllt. Dies erfordert jedoch einen zusätzlichen technischen Verfahrensschritt und ist daher aufwendig und kostenintensiv.

Aufgabe der vorliegenden Erfindung war es, Polycarbonatformmassen zur Verfügung zu stellen, die die genannten Nachteile nicht aufweisen. Insbesondere sollten sich die Polycarbonatformmassen leicht zu großteiligen Formteilen verarbeiten lassen, die für den Einsatz als Karosserieaußenteile geeignet sind. Da sie somit Metall ersetzen sollen, sollten Polycarbonatformmassen gefunden werden, die einer ganzen Palette von höchsten Anforderungen genügen sollen.

Diese Aufgabe wird von den eingangs definierten Formmassen erfüllt. Bevorzugte Ausführungsformen sind den Unteransprüchen und der Beschreibung zu entnehmen.

### Komponente A

Als Komponente A enthalten die Formmassen erfindungsgemäß ein oder eine Mischung aus zwei oder mehreren unterschiedlichen Polycarbonaten. Bevorzugte erfindungsgemäße Formmassen enthalten von 1 bis 97,45 Gew.-%, bezogen auf das Gesamtgewicht der Formmassen der Komponente A. Besonders bevorzugt sind Formmassen gemäß der Erfindung, die von 10 bis 92,4 Gew.-%, bezogen auf das Gesamtgewicht der Formmassen, der Komponente A enthalten.

Bevorzugt werden als Komponente A halogenfreie Polycarbonate eingesetzt. Geeignete halogenfreie Polycarbonate sind beispielsweise solche auf Basis von Diphenolen der allgemeinen Formel I 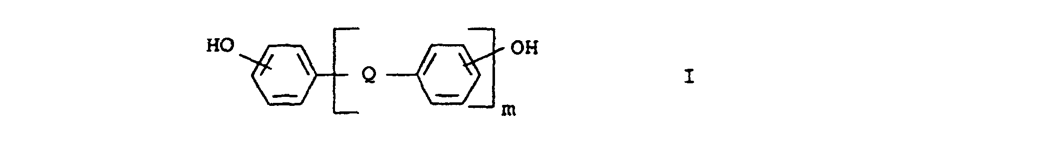 worin Q eine Einfachbindung, eine C₁- bis C₃-Alkylen-, eine C₂- bis C₃-Alkyliden-, eine C₃- bis C₆-Cycloalkylidengruppe, sowie -S- oder -SO₂- bedeutet und m eine ganze Zahl von 0 bis 2 ist.

Bevorzugte Diphenole der Formel I sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000.

Die Diphenole der allgemeinen Formel I sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethylbutyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

### Komponente B

Ein oder eine Mischung aus zwei oder mehreren unterschiedlichen Pfropfpolymerisaten werden als Komponente B in den erfindungsgemäßen Formmassen bevorzugt in Mengen von 1 bis 97,45 Gew.-%, bezogen auf auf das Gesamtgewicht der Formmassen, eingesetzt. Besonders bevorzugte erfindungsgemäße Formmassen enthalten von 2 bis 50 Gew.-%, bezogen auf das Gesamtgewicht der Formmassen, mindestens eines Pfropfpolymerisates B. Erfindungsgemäß basieren die Pfropfpolymerisate B auf einem Elastomeren mit einer Glasübergangstemperatur von unter 10°C, bevorzugt unter 0°C.

Unter einem Elastomeren im Sinne der vorliegenden Erfindung werden auch Mischungen aus unterschiedlichen Elastomeren verstanden. Als Elastomeren kommen Naturkautschuke oder synthetische Kautschuke z.B. Dienkautschuke, Acrylatkautschuke oder Siloxankautschuke in Betracht. Darunter werden Acrylatkautschuke bevorzugt.

Die besonders bevorzugten Pfropfpolymerisate B sind aufgebaut aus
b₁) 40 bis 80 Gew.-%, vorzugsweise 50 bis 70 Gew.-% einer Pfropfgrundlage aus einem kautschukelastischen Polymeren auf der Basis von Alkylacrylaten mit 1 bis 8 C-Atomen im Alkylrest und mit einer Glasübergangstemperatur von unter 0°C
b₂) 20 bis 60 Gew.-%, vorzugsweise 30 bis 50 Gew.-% einer Pfropfauflage aus
   b₂₁) 60 bis 95 Gew.-%, bevorzugt 70 bis 85 Gew.-% Styrol oder substituierten Styrolen der allgemeinen Formel II 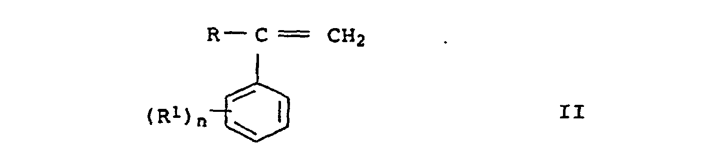 worin R einen C₁- bis C₈-Alkylrest, bevorzugt Methyl oder Ethyl, oder Wasserstoff bedeutet und R¹ einen C₁- bis C₈-Alkylrest, bevorzugt Methyl oder Ethyl, darstellt und n den Wert 1, 2 oder 3 hat oder deren Mischungen und
   b₂₂) 5 bis 40 Gew.-%, vorzugsweise 15 bis 30 Gew.-% mindestens eines ungesättigten Nitrils, bevorzugt Acrylnitril oder Methacrylnitril oder deren Mischungen.

Für die Pfropfgrundlage b₁ kommen besonders bevorzugt Polymere in Betracht, deren Glasübergangstemperatur unterhalb von -20°C liegt. Dies sind z.B. Elastomere auf der Basis von C₁- bis C₈-Alkylestern der Acrylsäure, die gegebenenfalls weitere Comonomere enthalten können.

Bevorzugt sind Pfropfgrundlagen b₁, die aufgebaut sind aus
b₁₁) 70 bis 99,9 Gew.-% mindestens eines Alkylacrylates mit 1 bis 8 C-Atomen im Alkylrest, vorzugsweise n-Butylacrylat und/oder 2-Ethyl-hexylacrylat, insbesondere n-Butylacrylat als alleiniges Alkylacrylat,
b₁₂) 0 bis 30 Gew.-% eines weiteren copolymerisierbaren monoethylenisch ungesättigten Monomeren, wie Butadien, Isopren, Styrol, Acrylnitril, Methylmethacrylat oder Vinylmethylether oder deren Mischungen,
b₁₃) 0,1 bis 5 Gew.-% eines copolymerisierbaren, polyfunktionellen, vorzugsweise bi- oder trifunktionellen, die Vernetzung bewirkenden Monomeren,
wobei sich die Gewichtsprozentangaben auf das Gesamtgewicht der Pfropfgrundlage beziehen.

Nach einer anderen bevorzugten Ausführungsform kann sich die Pfropfgrundlage aus
von 66 bis 79 Gew.-% b₁₁),
von 20 bis 30 Gew.-% b₁₂) und
von 1 bis 4 Gew.-% b₁₃)
zusammensetzen, wobei sich die Gewichtsprozentangaben auf das Gesamtgewicht der Pfropfgrundlage beziehen.

Als solche-bi- oder polyfunktionellen Vernetzungsmonomeren b₁₃) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanurat. Als besonders günstiges Vernetzungsmonomeres hat sich der Acrylsäureester des Tricyclodecenylalkohols erwiesen (vgl. DE-A 12 60 135).

Diese Art von Pfropfgrundlagen ist an sich bekannt und in der Literatur beschrieben, beispielsweise in der DE-A 31 49 358.

Von den Pfropfauflagen b₂ sind diejenigen bevorzugt, in denen b₂₁ Styrol oder α-Methylstyrol oder deren Mischungen und b₂₂ Acrylnitril oder Methacrylnitril bedeutet. Als bevorzugte MonomerenGemische werden vor allem Styrol und Acrylnitril oder α-Methylstyrol und Acrylnitril eingesetzt. Die Pfropfauflagen sind erhältlich durch Copolymerisation der Komponenten b₂₁ und b₂₂.

Die Herstellung der Pfropfgrundlage b₁ der Pfropfpolymerisate B, die aus den Komponenten b₁₁, gegebenenfalls b₁₂ und b₁₃ aufgebaut ist, ist an sich bekannt und beispielsweise in der DE-A 28 26 925, der DE-A 31 49 358 und der DE-A 34 14 118 beschrieben.

Die Herstellung der Pfropfpolymerisate B kann beispielsweise nach der in der DE-PS 12 60 135 beschriebenen Methode erfolgen.

Der Aufbau der Pfropfauflage (Pfropfhülle) der Pfropfpolymerisate kann ein-, zwei- oder mehrstufig erfolgen.

Im Falle des einstufigen Aufbaues der Pfropfhülle wird ein Gemisch der Monomeren b₂₁ und b₂₂ in dem gewünschten Gew.-Verhältnis im Bereich von 95:5 bis 50:50, vorzugsweise von 90:10 bis 65:35 in Gegenwart des Elastomeren b₁, in an sich bekannter Weise (vgl. z.B. DE-OS 28 26 925), vorzugsweise in Emulsion, polymerisiert.

Im Falle eines zweistufigen Aufbaus der Pfropfhülle b₂ macht die 1. Stufe im allgemeinen 20 bis 70 Gew.-%, vorzugsweise 25 bis 50 Gew.-%, bezogen auf b₂, aus. Zu ihrer Herstellung werden vorzugsweise nur Styrol oder substituierte Styrole oder deren Mischungen (b₂₁) verwendet.

Die 2. Stufe der Pfropfhülle macht im allgemeinen 30 bis 80 Gew.-%, insbesondere 50 bis 75 Gew.-%, jeweils bezogen auf b₂, aus. Zu ihrer Herstellung werden Mischungen aus den Monomeren b₂₁ und den Nitrilen b₂₂ im Gewichtsverhältnis b₂₁/b₂₂ von im allgemeinen 90:10 bis 60:40, insbesondere 80:20 bis 70:30 angewendet.

Die Bedingungen der Pfropfpolymerisation werden vorzugsweise so gewählt, daß Teilchengrößen von 50 bis 700 nm (d₅₀-Wert der integralen Massenverteilung) resultieren. Maßnahmen hierzu sind bekannt und z.B. in der DE-OS 28 26 925 beschrieben.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfpolymerisate mit unterschiedlicher Teilchengröße zu verwenden.

Um dies zu erreichen, werden die Teilchen des Kautschuks in bekannter Weise, z.B. durch Agglomeration, vergrößert, so daß der Latex bimodal (50 bis 180 nm und 200 bis 700 nm) aufgebaut ist.

In einer bevorzugten Ausführungsform wird eine Mischung aus zwei pfropfpolymerisaten mit Teilchendurchmessern (d₅₀-Wert der integralen Massenverteilung) von 50 bis 180 nm bzw. 200 bis 700 nm im Gewichtsverhältnis 70:30 bis 30:70 eingesetzt.

Der chemische Aufbau der beiden Pfropfpolymerisate ist vorzugsweise derselbe, obwohl die Hülle des grobteiligen Pfropfpolymerisates insbesondere auch zweistufig aufgebaut werden kann.

Mischungen aus der Komponente A und B, wobei letztere ein grobund ein feinteiliges Pfropfpolymerisat aufweist, sind z.B. in der DE-OS 36 15 607 beschrieben. Mischungen aus der Komponente A und B, wobei letzere eine zweistufige Pfropfhülle aufweist, sind aus EP-A 111 260 bekannt.

Neben den bereits genannten ASA-Kautschuken kommen auch die in der DE-A1-196 06198 beschriebenen, mit Oxazolingruppen modifizierten, in Betracht.

Die Komponente B kann auch eine Mischung aus den genannten Pfropfpolymerisaten mit einem oder mehreren unterschiedlichen Netzwerkkautschuken sein. Dabei kann der Anteil der Netzwerkkautschuke bezogen auf das Gesamtgewicht erfindugnsgemäßer Formmassen bis zu 20 Gew.-%, bevorzugt von 1 bis 15 Gew.-% betragen.

Bevorzugt werden Netzwerkkautschuke auf der Basis von Siloxanen und Acrylaten oder Methacrylaten.

Die bevorzugten Netzwerkkautschuke enthalten im allgemeinen
β₁) 30 bis 95 Gew.-%, bevorzugt von 40 bis 90 Gew.-% eines Netzwerkes als Pfropfgrundlage, das aus
   β₁₁) 10 bis 90 Gew.-%, bevorzugt von 20 bis 80 Gew.-% mindestens eines Polyorganosiloxans und
   β₁₂) 10 bis 90 Gew.-%, bevorzugt von 20 bis 80 Gew.-% eines Polyalkylacrylates oder eines Polyalkylmethacrylates oder deren Mischungen gebildet wird und
β₂) 5 bis 70 Gew.-%, bevorzugt von 10 bis 60 Gew.-% einer Pfropfauflage.

Bevorzugte Polysiloxane leiten sich von cyclischen Organosiloxanen mit vorzugsweise drei bis sechs Siliziumatomen ab. Beispiele geeigneter Siloxane sind Hexamethylcyclotrisiloxan, Octamethylcyclotetrasiloxan, Decamethylcyclopentasiloxan, Dodecamethylcyclohexasiloxan, Trimethyltriphenylcyclotrisiloxan, Tetramethyltetraphenylcyclotetrasiloxan oder Octaphenylcyclotetrasiloxan. Die Polysiloxane können aus einem oder verschiedenen Organosiloxanen aufgebaut sein.

Darüber hinaus enthalten die Polyorganosiloxane β₁₁ in der Regel von 0,1 bis 30 Gew.-%, bezogen auf β₁₁, mindestens eines Vernetzers . Tri- oder tetrafunktionelle Silane wie Trimethoxymethylsilan, Triethoxyphenylsilan, Tetramethoxysilan, Tetraethoxysilan, Tetra-n-propoxysilan oder Tetrabutoxysilan können als Vernetzer eingesetzt werden. Darunter sind tetrafunktionelle Silane besonders bevorzugt.

Weiterhin enthalten die Polyorganosiloxane im allgemeinen von 0 bis 10 Gew.-%, bezogen auf β₁₁, an pfropfaktiven Monomeren. Als pfropfaktive Monomere können beispielsweise ungesättigte Silane eingesetzt werden.

Bevorzugte pfropfaktive Monomere sind die Methacryloylsilane. Als Beispiele seien genannt:
β-Methacryloyloxyethyldimethoxymethylsilan
γ-Methacryloyloxypropylmethoxydimethylsilan
γ-Methacryloyloxypropyldimethoxymethylsilan
γ-Methacryloyloxypropyltrimethoxysilan
γ-Methacryloyloxypropylethoxydiethylsilan
γ-Methacryloyloxypropyldiethoxymethylsilan
δ-Methacryloyloxybutyldiethoxymethylsilan.

Verfahren zur Herstellung von Polyorganosiloxanen sind beipielsweise in der US 2,891,920 oder 3,294,725 beschrieben. Bevorzugt werden die Polyorganosiloxane dadurch hergestellt, daß in einem Lösungsmittel eine Mischung der Organosiloxane, der Vernetzer und gewünschtenfalls der pfropfaktiven Monomeren unter Scherung mit Wasser in Gegenwart eines Emulsionsmittels wie einer Alkylsulfonsäure oder vorzugsweise einer Alkylbenzolsulfonsäure gemischt werden. Als Emulsionsmictel können auch die Metallsalze der Alkylsulfonsäure oder der Alkylbenzolsulfonsäure eingesetzt werden.

Als monomere Bausteine enthalten die Polyalkylacrylate bzw. Polyalkylmethacrylate β₁₂ im allgemeinen Alkylacrylate oder Methacrylate oder deren Mischungen, Vernetzer und pfropfaktive Monomere, wobei Vernetzer und pfropfaktive Monomere jeweils allein oder zusammen verwendet werden können. Der Anteil von vernetzer und pfropfaktiven Monomeren liegt in der Regel zusammen im Bereich von 0,1 bis 20 Gew.-%, bezogen auf β₁₂.

Beispiele geeigneter Alkylacrylate bzw. Alkylmethacrylate sind Methylacrylat, Ethylacrylat, n-Propylacrylat, n-Butylacrylat, 2-Ethylhexylacrylat, Hexylmethacrylat, 2-Ethylhexylmethacrylat oder n-Laurylmethacrylat. Besonders bevorzugt wird n-Butylacrylat eingesetzt.

Der Vernetzer kann beispielsweise Ethylenglycoldimethacrylat, Propylenglycoldimethacrylat, 1,3-Butylenglycoldimethacrylat oder 1,4-Butylenglycoldimethacrylat sein.

Allylmethacrylat, Triallylcyanurat oder Triallylisocyanurat sind Beispiele geeigneter pfropfaktiver Monomerer. Darunter kann Allylmethacrylat auch als Vernetzer wirken.

Die Herstellung des Netzwerkes erfolgt dadurch, daß die monomeren Bausteine der Komponente β₁₂ zu dem Polyorganosiloxan β₁₁ gegeben werden, der durch Zugabe von einer wässrigen Lösung einer Base wie Natriumhydroxid, Kaliumhydroxid oder Calciumhydroxid neutralisiert ist. Dadurch wird das Polyorganosiloxan angequollen. Anschließend werden übliche Radikalstarter zugesetzt. Im verlauf der Polymerisationsreaktion bildet sich ein Netzwerk, bei dem die Komponenten β₁₁ und β₁₂ sich gegenseitig durchdringen. Die Netzwerke können auch miteinander über chemische Bindungen verknüpft sein.

Ganz besonders bevorzugt sind Netzwerke bei denen das Polyorganosiloxan eine Hauptkette aus Dimethylsiloxan aufweist und β₁₂ ein Polyalkylacrylat ist, das eine Hauptkette aus n-Butylacrylat hat.

Der Gelgehalt des Netzwerkes beträgt in der Regel mehr als 80 % (gemessen durch Extraktion mit Toluol bei 90°C über einen Zeitraum von 12 h).

Die Pfropfauflage β₂ ist in der Regel aus vinylischen Monomeren aufgebaut. Zu diesen zählen Styrol, α-Methylstyrol, Vinyltoluol, Acrylsäureester, z.B. Methylacrylat, Ethylacrylat, oder n-Butylacrylat, Methacrylsäureester wie Methylmethacrylat oder 2-Ethylmethacrylat, Nitrile, beispielsweise Acrylnitril oder Methacrylnitril. Die vinylischen Monomeren können alleine verwendet werden. Es können aber auch Mischungen unterschiedlicher Monomerer eingesetzt werden. Dabei werden die Monomeren im allgemeinen derart gewählt, daß die Pfropfauflage eine Glasübergangstemperatur von mindestens 80°C, bevorzugt im Bereich von 80 bis 110°C (bestimmt mittels Torsionspendelmessung bei einer Frequenz von 1 Hz und einer Aufheizrate von 10°C/min) hat. Besonders bevorzugt werden Pfropfauflagen, die einen überwiegenden Anteil an Methylmethacrylat aufweisen, bevorzugt Pfropfauflagen mit mindestens 85 Gew.-% Methylacrylat. Besonders bevorzugt werden Pfropfauflagen mit einem Anteil von 95 bis 100 Gew.-% Methylmethacrylat. Neben Methylmethacrylat werden bevorzugt Styrol, n-Butylacrylat oder Cyclohexylmethacrylat eingesetzt. Ganz besonders bevorzugt wird Methylmethacrylat alleine verwendet.

### Komponente C

Als Komponente C enthalten die erfindungsgemäßen Formmassen bevorzugt von 1 bis 97,45 Gew.-%, bezogen auf das Gesamtgewicht der Formmassen eines oder eine Mischung aus zwei oder mehreren unterschiedlichen Copolymerisaten, die vinylaromatische Monomere enthalten. Bevorzugt werden Copolymerisate auf der Basis von Styrol oder substituierten Styrolen und ungesättigten Nitrilen.

Besonders bevorzugte erfindungsgemäße Formmassen enthalten die Komponente C in Anteilen von 2 bis 50 Gew.-%, bezogen auf das Gesamtgewicht der Formmassen.

Als Copolymerisate kommen sowohl statistische als auch Blockcopolymerisate in Betracht. Beispiele geeigneter Copolymerisate sind Polystyrol-co-Acrylnitril oder Terpolymere auf der Basis von Styrol, Acrylnitril und N-Phenylmaleinimid oder Oxazolingruppen enthaltende Copolymerisate.

Die Copolymerisate C sind besonders bevorzugt aus
c₁) 60 bis 95 Gew.-%, vorzugsweise 65 bis 85 Gew.-% Styrol oder substituierten Styrolen der allgemeinen Formel I oder deren Mischungen und
c₂) 5 bis 40 Gew.-%, vorzugsweise 15 bis 35 Gew.-% mindestens eines ungesättigten Nitrils, bevorzugt Acrylnitril oder Methacrylnitril oder deren Mischungen
aufgebaut.

Die Copolymerisate C sind harzartig, thermoplastisch und kautschukfrei. Besonders bevorzugte Copolymerisate C sind solche aus Styrol und Acrylnitril, aus α-Methylstyrol und Acrylnitril oder aus Styrol, α-Methylstyrol und Acrylnitril.

Solche Copolymerisate entstehen häufig bei der Pfropfpolymerisation zur Herstellung der Komponente B als Nebenprodukte, besonders dann, wenn große Mengen Monomere auf kleine Mengen Kautschuk gepropft werden.

Die Copolymerisate C sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160, bevorzugt 60 bis 110 ml/g (gemessen in 0,5 gew.-%iger Lösung in Dimethylformamid bei 23°C) auf, dies entspricht mittleren Molekulargewichten M_{w} (Gewichtsmittelwert) von 40 000 bis 2 000 000.

Verfahren zur Herstellung von Oxazolingruppen enthaltenden Polymerisaten sind ebenfalls an sich bekannt. Oxazolingruppen enthaltende Copolymerisate können z.B. durch Umsetzen von Nitrilgruppen enthaltenden Copolymerisaten mit einem Monoaminoalkohol, vorzugsweise in Gegenwart eines Katalysators wie eines Zink- oder Cadmiumsalzes hergestellt werden (siehe z.B. DE-A1-196 0 61 98).

### Komponente D

Als weitere Komponente enthalten die erfindungsgemäßen Formmassen ein oder eine Mischung aus zwei oder mehreren Füllstoffen. In der Regel sind diese in Mengen von 0,5 bis 25, insbesondere von 1 bis 20 Gew.-%, bezogen auf das Gesamtgewicht der Formmassen, enthalten.

Als Komponente D werden erfindungsgemäß teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren sogenanntes Aspektverhältnis im Bereich von 1 bis 25, bevorzugt im Bereich von 2 bis 20 liegt, bestimmt am fertigen Produkt.

Die Teilchendurchmesser können dabei z.B. dadurch bestimmt werden, daß elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, die weniger als 40 µm beträgt kann auch mittels Siebanalyse gemessen werden. Das Aspektverhältnis ist das Verhältnis von Teilchendurchmesser zu Dicke (größter Ausdehnung zu kleinster Ausdehnung).

Als teilchenförmige Füllstoffe eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Besonders bevorzugt werden als teilchenförmige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

### Komponente E

Optional können die erfindungsgemäßen Formmassen ein oder eine Mischung aus zwei oder mehr unterschiedlichen Flammschutzmitteln enthalten. Im allgemeinen sind diese in Anteilen von 0 bis 25, bevorzugt von 1 bis 20 Gew.-%, bezogen auf das Gesamtgewicht der Formmassen, enthalten.

Besonders bevorzugt werden halogenfreie Flammschutzmittel verwendet. Prinzipiell sind alle phosphorhaltigen Flammschutzmittel besonders geeignet.

Beispielsweise können halogenfreie Phosphorverbindungen der allgemeinen Formel III 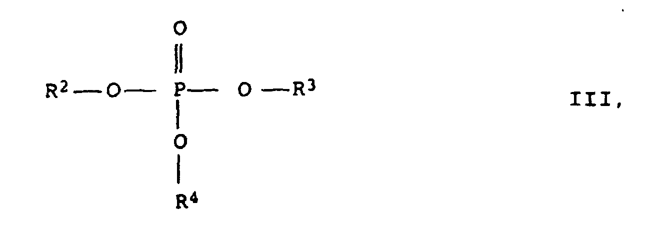 in der
- R², R³, R⁴: unabhängig voneinander gleich oder verschieden sein können und halogenfreie C₁-C₈-Alkylgruppen oder halogenfreie C₆- bis C₂₀-Arylgruppen, die ein- bis zweifach durch C₁- bis C₄-Alkylgruppen substituiert sein können
bedeuten, verwendet werden.

Als besonders geeignete Phosphorverbindungen der allgemeinen Formel III lassen sich beispielsweise Tri-(2,6-dimethylphenyl)-phosphat, Triphenylphosphat, Trikresylphosphat, Diphenyl-2-ethyl-kresylphosphat, Diphenyl-kresylphosphat und Tri-(isopropylphenyl)-phosphat nennen.

Um eine erhöhte Vicat-Temperatur in den Formmassen einzustellen, können auch Mischungen der obengenannten Phosphate mit beispielsweise Triphenylphosphinoxid oder Tri-(2,6-dimethylphenyl)-phosphinoxid eingesetzt oder die genannten Phosphinoxide alleine verwendet werden.

Weiterhin ist der Zusatz der in der DE-A 38 24 356 genannten Phosphate wie Phosphorsäure-bis-phenyl-(4-phenylphenyl)-ester, Phosphorsäure-phenyl-bis-(4-phenylphenyl)-ester, Phosphorsäuretris-(4-phenylphenyl)-ester, Phosphorsäure-bis-phenyl-(benzylphenyl)-ester, Phosphorsäure-phenyl-bis-(benzylphenyl)-ester, Phosphorsäure-tris-(benzylphenyl)-ester, Phosphorsäure-phenylbis-[(1-phenylethyl)-phenyl]-ester, Phosphorsäure-phenylbis-[(1-methyl-1-phenylethyl)-phenyl]-ester und Phosphorsäurephenyl-bis-[4-(1-phenylethyl)-2,6-dimethylphenyl]-ester zur Erhöhung der Vicat-Temperatur der Formmassen geeignet.

Darüber hinaus kommen Phosphorsäureester mit mehr als einem P-Atom pro Molekül als Komponente E in Betracht. Beispiele sind monomere oder oligomere Phosphorverbindungen der Formeln IV, V oder VI 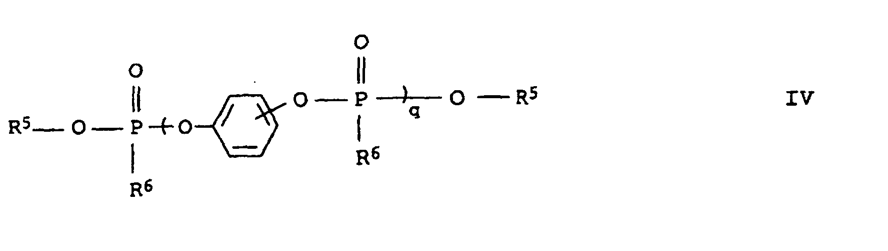 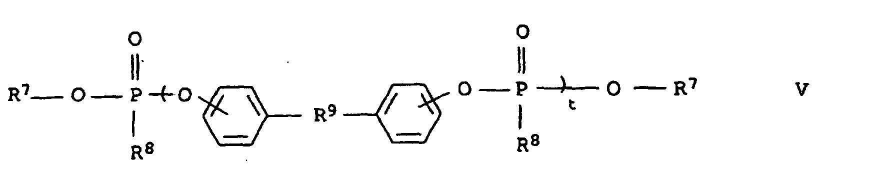 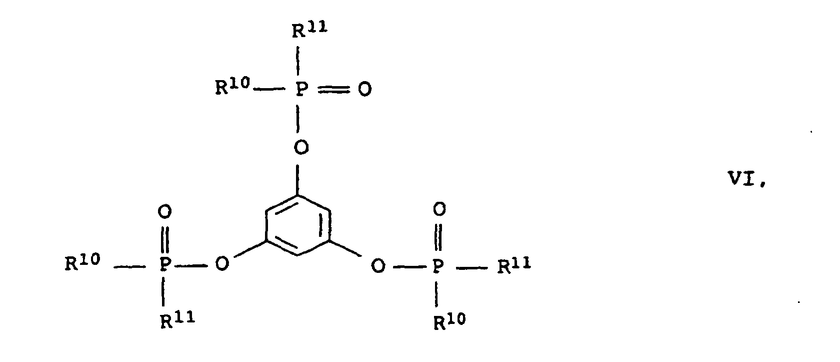 worin
- R⁵ und R⁷: unabhängig voneinander für gegebenenfalls substituiertes Alkyl oder Aryl stehen;
- R⁶, R⁸, R¹⁰ und R¹¹: unabhängig voneinander für gegebenenfalls substituiertes Alkyl, Aryl, Alkoxy oder Aryloxy stehen;
- R⁹: für Alkylen, -SO₂-, -CO-, -N=N- oder -(R¹²)P(O)- steht, worin
- R¹²: für gegebenenfalls substituiertes Alykl, Aryl oder Alkylaryl steht und q und t unabhängig voneinander einen mittleren, oder auch ganzzahligen, Wert von 1 bis 30 einnehmen.

Gegebenenfalls substituiert bedeutet, daß die Gruppen einen bis fünf, bevorzugt einen oder zwei Substituenten haben können, wobei geeignete Substituenten in Verbindungen der Formeln IV, V und VI Cyano, Hydroxy oder C₁₋₄-Alkyl sind.

Bevorzugte Alkylreste in Verbindungen der Formeln IV, V und VI sind C₁₋₂₀-Alkyl, wie Methyl, Ethyl, n-Propyl, n-Butyl, Neopentyl, n-Hexyl, n-Octyl, n-Nonyl, n-Dodecyl, 2-Ethylhexyl oder 3,5,5-Trimethylhexyl. Ebenfalls bevorzugt ist Cyanoethyl.

Bevorzugte Arylreste in Verbindungen der Formeln IV, V und VI sind Phenyl oder Naphthyl sowie einfach oder mehrfach substituierte Reste, wie Tolyl, Xylyl, Mesityl oder Cresyl.

Bevorzugte Alkylarylreste in Verbindungen der Formeln IV, V und VI sind C₁₋₂₀-Alkylaryl- und insbesondere C₁₋₁₂-Alkylarylreste, wobei Alkylteil und Arylteil wie oben definiert sind.

Bevorzugte Alkoxyreste in Verbindungen der Formeln IV, V und VI sind C₁₋₂₀-Alkoxyreste, wobei der C₁₋₂₀-Alkylteil wie oben definiert ist.

Bevorzugte Aryloxyreste in Verbindungen der Formeln IV, V und VI sind solche, worin der Arylanteil wie oben definiert ist.

Bevorzugte Alkylenreste in Verbindungen der Formeln IV, V und VI sind C₁₋₆-Alkylenreste, wie Methylen, Ethylen, n-Propylen oder n-Hexylen.

Bevorzugt werden diese Verbindungen durch Umesterung unter Basenkatalyse bzw. durch Umsetzung von Phosphoroxichlorid mit Phenolen unter Katalyse von Magnesium- bzw. Aluminiumchlorid erhalten. Bevorzugt verwendet man die handelsüblichen Produkte auf Basis von Resorcindiphenylphosphat sowie die kommerziell erhältlichen Umsetzungsprodukte von Bisphenol A und Triphenylphosphat.

Dabei ist zu beachten, daß die technisch verfügbaren Produkte in der Regel jeweils Mischungen verschiedener Oligomere bzw. Isomere darstellen.

Des weiteren können Mischungen der höheren Phosphate und Monophosphate bzw. Monophosphinoxide in jedem Mischungsverhältnis eingesetzt werden.

Phosphorsäureester, die als Komponente E eingesetzt werden können, sind ferner solche der Formel VII 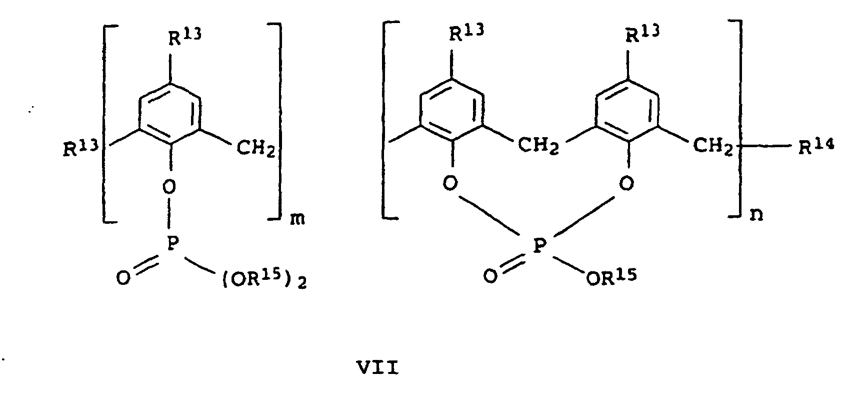 worin
- R¹³: Wasserstoff oder Alkyl mit 1 bis 8 Kohlenstoffatomen, bevorzugt Methyl, bedeutet und
- R¹⁴: 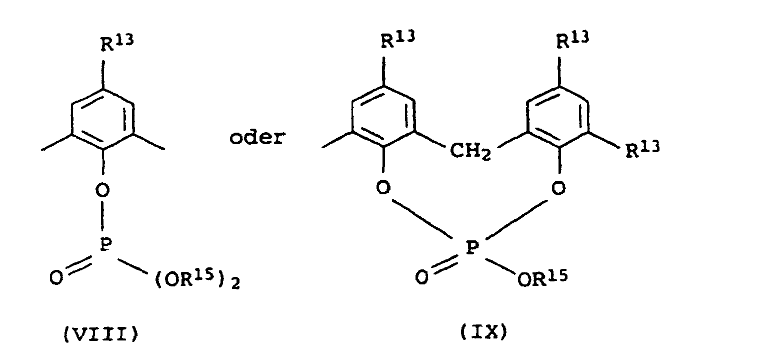 bedeutet und
- R¹⁵: Phenyl, wobei dieses durch Alkyl mit 1 bis 4 Kohlenstoffatomen, Phenyl, Benzyl oder 2-Phenyl-ethyl, substituiert sein kann, ist und
worin bei m gleich null n mindestens 1 und R¹⁴ ein Rest der Formel IX sein muß,
worin bei n gleich null m mindestens 2 und R¹⁴ ein Rest der Formel VIII sein muß, worin
m eine ganze Zahl von null bis 12 und n eine ganze Zahl von null bis 5 sind,
wobei die Kernzahl des Polyphenolmoleküls, also die Zahl der Benzolringe der Verbindung VII, ohne die Reste R¹³ bis R¹⁵ nicht höher als 12 ist.

Beispiele für Phosphorsäureester nach Formel VII sind die Phosphorsäureester von Novolaken. Geeignete Novolake sind Kondensationsprodukte aus Formaldehyd und Phenolen.

Charakteristische Beispiele für Phenole sind Phenol, o-Kresol, m-Kresol, p-Kresol, 2,5-Dimethyl-, 3,5-Dimethyl-, 2,3,5-Trimethyl-, 3,4,5-Trimethyl-, p-t-Butyl-, p-n-Octyl-, p-Stearyl-, p-Phenyl-, p-(1-Phenylethyl)-, 1-Phenylethyl-, o-Isopropyl-, p-Isopropyloder m-Isopropylphenol.

Bevorzugt eingesetzt werden Phenol, o-Kresol, p-Kresol, p-t-Butylphenol und o-t-Butylphenol und p-Octylphenol.

Es können aber auch Gemische aus diesen Phenolen eingesetzt werden.

Bevorzugt eingesetzte Novolake sind Phenol/Formaldehyd-Novolak, o-Kresol/Formaldehyd-Novolak, m-Kresol/Formaldehyd-Novolak, p-Kresol/Formaldehyd-Novolak, t-Butylphenol/Formaldehyd-Novolak oder o-Octylphenol/Formaldehyd-Novolak. Besonders bevorzugt wird p-Kresol/Formaldehyd-Novolak. (Siehe für Novolake: Houben-Weyl, Methoden der organischen Chemie, Band XIV/2, Seiten 193 bis 292, und Ullmanns Encyclopädie der technischen Chemie, 4. Auflage, Band 18, Seiten 245 bis 257; für Phosphate: beispielsweise Ullmanns Encyclopädie der technischen Chemie; Bd. 12/1, S. 299 bis 374).

### Komponente F

Ein oder eine Mischung unterschiedlicher Additive können darüber hinaus in den erfindungsgemäßen Formmassen in Mengen von 0 bis 20, bevorzugt von 1 bis 15 Gew.-%, bezogen auf das Gesamtgewicht der Formmassen enthalten sein. Für Polycarbonatformmassen typische und gebräuchliche Additive wie Farbmittel, z.B. Pigmente, optische Aufheller oder fluoreszierende Farbstoffe, Antistatika, Antioxidantien, wie sterisch gehinderte Phenole, insbesondere Tetrakis[methylen(3,5-di-t-butyl-4-hydroxyhydrochininamat)]methan oder 3,5-Di-t-butyl-4-hydroxyhydrocinnamat, UV-Stabilisatoren, Haftvermittler, Formtrennmittel wie langkettige Fettsäureester oder Schmiermittel kommen als Komponente F in Betracht. Als UV-Stabilisatoren können z.B. Phosphite, Hypophosphite oder Phosphonite eingesetzt werden. Darunter werden Phosphite bevorzugt, deren drei organische Reste sterisch gehinderte Phenole sind, wie Tri(2,4-di-t-butyl-phenyl)phosphit. Diese und weitere als Komponente G verwendbare UV-Stabilisatoren und Antioxidantien sowie Verfahren zu deren Herstellung sind der DE-A1-44 19 897 zu entnehmen.

Diese halogenfreien Phosphorverbindungen F sind generell bekannt (siehe beispielsweise Ullmann, Enzyklopädie der technischen Chemie, Bd. 18, S. 301ff, 1979, Houben Weyl, Methoden der organischen Chemie, Bd. 12/1, S. 43, S. 136; Beilstein, Bd. 6, S. 177).

### Komponente G

Der Anteil dieser Komponente an den Formmassen beträgt im allgemeinen von 0,05 bis 2, bevorzugt von 0,1 bis 1,8 Gew.-%, bezogen auf das Gesamtgewicht der Formmassen.

Erfindungsgemäß ist die Komponente D eine Säure, die aus der Gruppe Palmitinsäure, Stearinsäure, Benzoesäure, Isophthalsäure, Terephthalsäure, Trimellithsäure, Sulfonsäuren wie p-Toluolsulfonsäure, Fumarsäure, Zitronensäure, Mandelsäure oder Weinsäure ausgewählt ist. Selbstverständlich werden auch ihre säuretypischen Assoziate unter dem Begriff Säure verstanden. Mitumfaßt sind ferner ihre Säurehydrate.

Besonders bevorzugt werden Zitronensäure oder p-Toluolsulfonsäure oder deren Mischungen eingesetzt. Beispielsweise kann darin der Gewichtsanteil der Zitronensäure von 1 bis 99, bevorzugt von 10 bis 90 % und der der p-Toluolsulfonsäure entsprechend von 1 bis 99, bevorzugt von 10 bis 90 % betragen.

### Komponente H

Erfindungsgemäß enthalten die Formmassen ein oder eine Mischung aus zwei oder mehreren unterschiedlichen Poly(alkyl)acrylaten. Im allgemeinen sind die Poly(alkyl)acrylate in Anteilen von 0 bis 10, bevorzugt von 0,5 bis 5, bezogen auf das Gesamtgewicht der Formmassen, in den Formmassen enthalten.

Als Komponente H kommen sowohl Homo- als auch Copolymere wie statistische oder Blockcopolymere auf der Basis von Alkylacrylaten oder Acrylaten oder deren Mischungen in Betracht.

Nach einer bevorzugten Ausführungsform werden Poly(alkyl)acrylate eingesetzt, die mit der Komponente C verträglich sind.

Unter der Verträglichkeit zweier Polymerkomponenten versteht man in der Regel die Mischbarkeit der Komponenten oder die Neigung des einen Polymeren, sich in der anderen Polymerkomponenten zu lösen (siehe B. Vollmert, Grundriß der makromolekularen Chemie, Band IV, S. 222 ff, E. Vollmert Verlag 1979). Die Löslichkeit zweier Polymere läßt sich indirekt beispielsweise durch Torsionsschwingungs-, DTA- oder DSC-Messungen, über die optische Klarheit deren Mischungen oder mittels Kernspinresonanz-(NMR)-Relaxationsmethoden bestimmen.

Besonders bevorzugt werden Copolymere, die aus mindestens zwei unterschiedlichen Alkylestern, aromatischen oder alkylaromatischen Ester der Acrylsäure oder der Methacrylsäure oder deren Mischungen aufgebaut sind.

Im allgemeinen haben die Ester 1 bis 10, bevorzugt 1 bis 8 Kohlenstoffatome im Alkylrest. Der Alkylrest kann sowohl linear als auch verzweigt sein. Zu den Alkylresten zählt Methyl, Ethyl, n-Propyl, i-Propyl, n-Butyl, i-Butyl, t-Butyl, n-Pentyl, 2-Ethylhexyl oder Cyclohexyl. Bevorzugt werden Methylmethacrylat, Cyclohexylmethacrylat, n-Butylacrylat oder 2-Ethylhexylacrylat verwendet. Unter den aromatischen Estern sind Ester mit 6 bis 18 Kohlenstoffen bevorzugt, darunter insbesondere Phenyl. Besonders bevorzugt werden Polyalkylacrylate G, die von 70 bis 99, insbesondere von 80 bis 93 Gew.-% Methylmethacrylat und von 1 bis 30, insbesondere von 7 bis 20 Gew.-% n-Butylacrylat enthalten.

Besonders bevorzugt haben die Polyalkylacrylate H ein hohes Molekulargewicht. In der Regel weisen sie Molekulargewichte (Zahlenmittelwert M_{w}) von mindestens 1.000.000 g/mol (gemessen mittels Gelpermeationschromatographie'in Tetrahydrofuran gegen einen Polystyrolstandard) auf. Bevorzugte Polyalkylacrylate G haben Molekulargewichte M_{w} von 1.100 000 g/mol oder darüber, beispielsweise mindestens 1.200 000 g/mol. Im allgemeinen haben die Polyalkylacrylate G eine Glasübergangstemperatur im Bereich von 40 bis 125, bevorzugt 70 bis 120°C (bestimmt mittels DSC-Messungen, bei einer Aufheizrate von 10 k/min, zweiter Cyclus nach Aufheizen auf 175°C und Abkühlen auf Raumtemperatur).

Die Poly(alkyl)acrylate sind an sich bekannt oder nach an sich bekannten Methoden erhältlich. Beispielsweise können sie nach dem in H. G. Elisas, Makromoleküle. 4. Aufl. 1981, Hüthig & Wepf Verlag, Basel beschriebenen Verfahren der Suspensionspolymerisation hergestellt werden.

Die Herstellung der erfindungsgemäßen Formmassen erfolgt nach an sich bekannten Verfahren durch Mischen der Komponenten. Es kann vorteilhaft sein, einzelne Komponenten vorzumischen. Die Netzwerkkautschuke der Komponente B können getrennt von den anderen Pfropfpolymerisaten zugegeben werden. Auch das Mischen der Komponenten in Lösung und Entfernen der Lösungsmittel ist möglich.

Geeignete organische Lösungsmittel für die Komponenten A bis C und die Additive F sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten A, B, C, D, G und H und gegebenenfalls E und/oder F kann nach allen bekannten Methoden erfolgen. Vorzugsweise geschieht jedoch das Mischen der Komponenten A, B, C, D, G und H und gegebenenfalls E und/oder F bei Temperaturen von 200 bis 320°C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind.

Die erfindungsgemäßen thermoplastischen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Die erfindungsgemäßen Formteile können zur Herstellung von Formteilen, Fasern oder Folien verwendet werden. Bevorzugt werden aus den erfindungsgemäßen Formmassen Formteile hergestellt. Letztere können klein- oder großteilig und für Außen- oder Innenanwendungen gedacht sein. Bevorzugt werden großteilige Formteile für den Fahrzeugbau, insbesondere den Automobilsektor aus den erfindungsgemäßen Formmassen hergestellt. Insbesondere können aus den erfindungsgemäßen Formmassen Radkappen oder Karosserieaußenteile gefertigt werden. Beispielhaft seinen Kotflügel, Heckklappen, Motorhauben, Ladeflächen, Abdeckungen für Ladeflächen, Seitenwände für Ladeflächen oder Autodächer, darunter abnehmbare oder hochklappbare Autodächer oder Autodachteile genannt.

Die erfindungsgemäßen Formmassen zeichnen sich dadurch aus, daß sie verarbeitungsstabil sind und sich leicht verarbeiten lassen. Die daraus hergestellten Formteile sind dimensionsstabil und weisen ein gegenüber dem Stand der Technik verbessertes Bruchverhalten bei tiefen Temperaturen auf. Darüber hinaus erfüllen die Formmassen hohe Anforderungen hinsichtlich der Temperaturstabilität.

### Beispiele

Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem d₅₀-Wert entspricht. Ebenso haben dann 50 Gew.-% der Teilchen einen größeren Durchmesser als der d₅₀-Wert. Zur Charakterisierung der Breite der Teilchengrößenverteilung der Kautschukteilchen werden neben dem d₅₀-Wert (mittlerer Teilchendurchmesser) die sich aus der integralen Massenverteilung ergebenden d₁₀- und d₉₀-Werte herangezogen. Der d₁₀- bzw. d₉₀-Wert der integralen Massenverteilung ist dabei entsprechend dem d₅₀-Wert definiert mit dem Unterschied, daß sie auf 10 bzw. 90 Gew.-% der Teilchen bezogen sind. Der Quotient Q=(d₉₀-d₁₀)/d₅₀ stellt ein Maß für die Verteilungsbreite der Teilchengröße dar.

Es wurden folgende Komponenten eingesetzt:
A¹) Ein handelsübliches Polycarbonat auf der Basis von Bisphenol A mit einer Viskositätszahl von 61,3 ml/g, gemessen an einer 0,5 gew.-%igen Lösung in Methylenchlorid bei 23°C.
B¹) Ein feinteiliges Pfropfpolymerisat, hergestellt aus
   γ₁) 16 g Butylacrylat und 0,4 g Tricyclodecenylacrylat, die in 150 g Wasser unter Zusatz von 1 g des Natriumsalzes einer C₁₂-C₁₈-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 Minuten nach dem Anspringen der Polymerisationsreaktion wurden innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt und die Teilchengrößenverteilung war eng (Quotient Q = 0,29).
   γ₂) 150 g des nach β₁) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 91 nm.
B²) Ein grobteiliges Pfropfpolymerisat, das folgendermaßen hergestellt wurde:
   γ₃) Zu einer Vorlage aus 1,5 g des nach β₁) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer C₁₂-C₁₈-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt, die Teilchengrößenverteilung war eng (Q = 0,1).
   γ₄) 150 g des nach β₃) hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.
C¹) Ein Copolymerisat aus Styrol und Acrylnitril im Gew.-Verhältnis 81:19 mit einer Viskositätszahl von 72 ml/g (gemessen an einer 0,5 gew.-%igen Lösung in Dimethylformamid bei 23°C), hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.
D¹⁾ Talkum (IT-Extra der Firma Norwegian Talc), dadurch charakterisiert, daß die mittlere Teilchengröße (X₅₀-Wert) 4,91 µm betrug und die mittlere Teilchengröße von 90 % aller Teilchen (X₉₀-Wert) kleiner als 10,82 µm war, bestimmt mittels Laserbeugung, wobei das Talkum in einer Suspensionszelle in einem Gemisch aus Wasser und Tensid (VE-wasser/CV-K8-Tensid:99/1, Vertreiber: CV-Chemievertrieb, Hannover) mittels eines Magnetrührers bei einer Drehzahl von 60 U/min suspendiert wurde. Der pH-Wert der wäßrigen Suspension betrug 8,5.
D²⁾ Talkum (Microtalc MP 10-52 der Firma Pfizer), charakterisiert durch einen X₅₀-Wert von 3,6 µm und einen X₉₀-Wert von kleiner als 8,9 µm, bestimmt anhand einer Suspension wie unter D¹⁾ beschrieben. Der pH-Wert der wäßrigen Suspension betrug 8,6.
D³⁾ Talkum D¹⁾, der durch 0,1 n HCL-Lösung neutralisiert wurde. Der pH-Wert der wäßrigen Suspension betrug 7,3.
E¹) Triphenylphosphat (Disflamoll® TP der Firma Bayer)
E²) Resorcinoldiphenylphosphat (Fyroflex® RDP der Firma Akzo)
F¹) Ein hochmolekularer Mehrkomponentenester auf Fettsäurebasis (Loxiol® G70S der Firma Henkel), charakterisiert durch eine Schmelzviskosität von 110 bis 150 mPas bei 80°C.
F²) Polytetrafluorrethylen (Teflon-Dispersion 30N der Firma DuPont)
G¹⁾ p-Toluolsulfonsäure-Hydrat, Reinheit 98 %, Schmelzpunkt: 103°C.
G²⁾ Zitronensäure-Hydrat, Reinheit 99 %.
H¹⁾ Polymethylmethacrylat, charakterisiert durch ein Molekulargewicht (Gewichtsmittelwert M_{w}) von 1.000.000 g/mol (bestimmt mittels Gelpermeationschromatographie in Tetrahydrofuran gegen Polymethylmethacrylateichung).
H²) Ein Copolymer aus 89 Gew.-% Methylmethacrylat und 11 Gew.-% n-Butylacrylat, charakterisiert durch ein Molekulargewicht (Gewichtsmittelwert M_{w}) von 1.800.000 g/mol (bestimmt mittels Gelpermeationschromatographie in Tetrahydrofuran gegen Polystyrolstandard).
VH³ Polyacrylsäure, charakterisiert durch ein Molekulargewicht (Gewichtsmittelwert M_{w}) von 2000 g/mol.

### Herstellung der Formmassen

Die in der Tabelle angegebenen Komponenten wurden in einem Zweiwellenextruder (ZKS 30 der Firma Werner und Pfleiderer) bei 250 bis 280°C gemischt, als Strang ausgetragen, abgekühlt und granuliert. Das getrocknete Granulat wurde bei 250 bis 280°C zu Normkleinstäben, ISO-Prüfkörpern und Rundscheiben (60 x 3 mm) bei einer Werkzeugtemperatur von 80°C verarbeitet.

### Anwendungstechnische Prüfungen

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Fließfähigkeit (MVI) der Formmassen wurde nach DIN 53 735 bei Temperaturen von 260°C und 5 kg Belastung bestimmt.

Die Kerbschlagzähigkeit (aₖ) wurde nach ISO 179 1eA bei Raumtemperatur bestimmt.

Die Reißdehnung wurde nach ISO 527 bei einer Deformationsgeschwindigkeit von 50 mm/min und Raumtemperatur ermittelt.

Die Durchstoßarbeiten Wₛ [Nm] (Mittelwert aus fünf Einzelmessungen) wurden mittels Durchstoßtests nach DIN 53 443 bei -30°C gemessen. Sowohl die Energieaufnahme als auch der Deformationsweg wurden bestimmt.

Die thermische Ausdehnung (CTE) wurde nach DIN 53 752, Verfahren A an jeweils 2 Probekörpern (10 x 10 x 4 cm) bestimmt. Angegeben sind die in Längsrichtung bei 25°C gemessenen Werte.

Die Einteilung in die entsprechenden Brandklassen erfolgte gemäß UL-94 nach folgenden Kriterien:

| Brandklasse | Brennzeit [s] | Gesamtbrennzeit [s] | Brennendes Abtropfen |
|---|---|---|---|
| V-0 | ≤ 10 | ≤ 50 | nein |
| V-1 | ≤ 30 | ≤ 250 | nein |
| V-2 | ≤ 30 | ≤ 250 | ja, mit Entzünden der Watte |
| V-- | keine Zuordnung zu den obigen Klassen möglich | | |

Die Zusammensetzungen und die Ergebnisse der anwendungstechnischen Prüfungen sind den Tabellen 1 und 2 zu entnehmen.

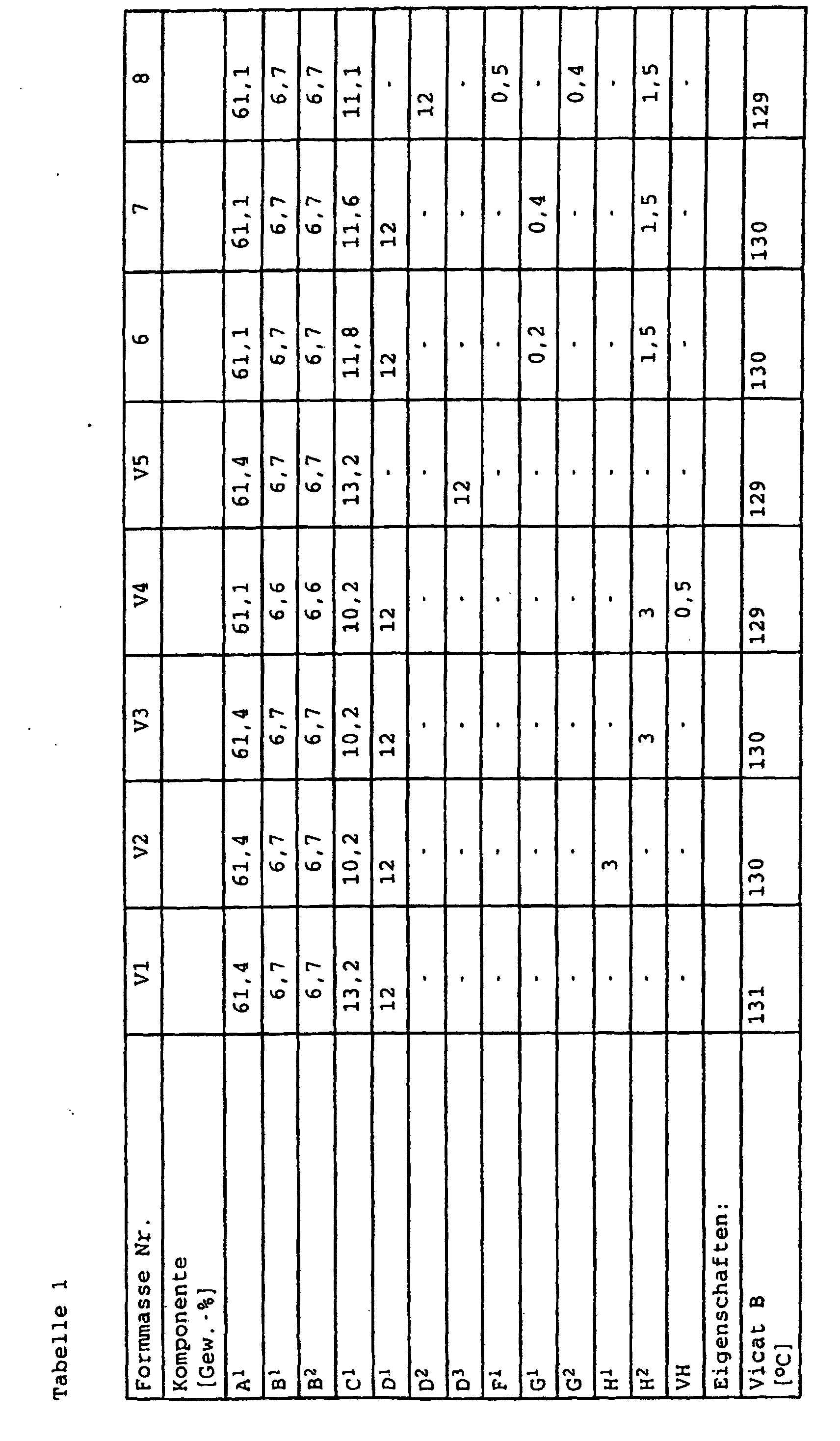

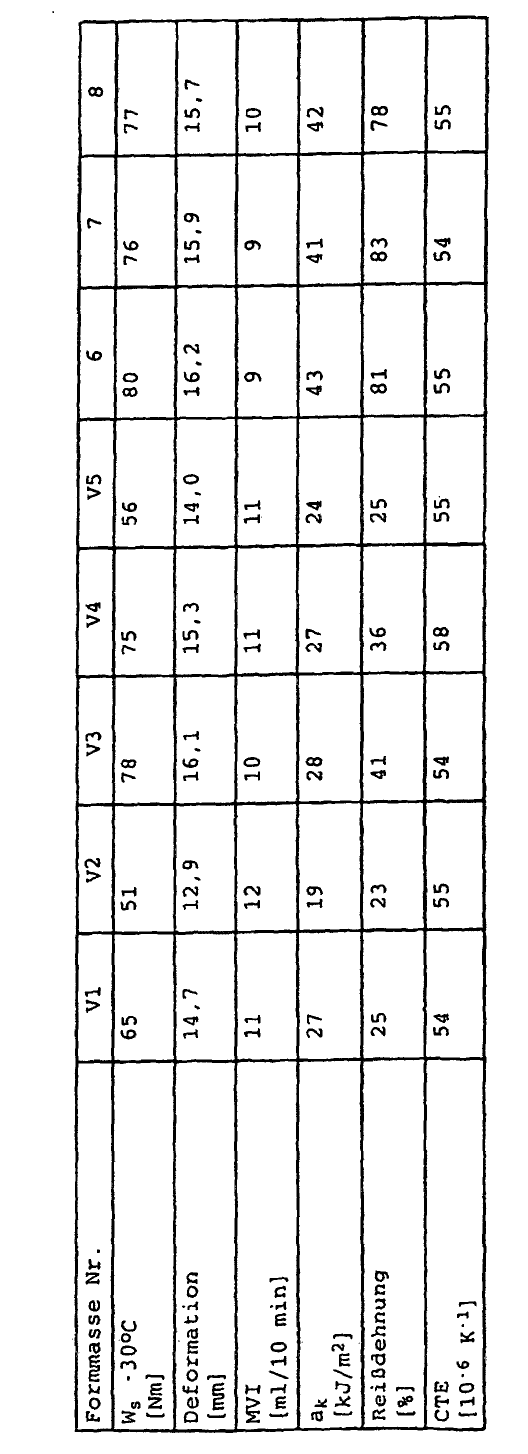

**Tabelle 2**

| Formmasse Nr. | v 6 | 9 |
|---|---|---|
| Komponente [Gew.-%] | | |
| A¹ | 79,9 | 78,6 |
| B¹ | 2,75 | 2,7 |
| B² | 2,75 | 2,7 |
| C¹ | 5,5 | 4,4 |
| D¹ | - | 5,0 |
| E¹ | - | 4,7 |
| E² | 7,4 | - |
| F¹ | 0,3 | 0,3 |
| F² | 0,4 | 0,4 |
| G² | - | 0,2 |
| H² | - | 1 |
| Eigenschaften: | | |
| Vicat B [°C] | 107 | 120 |
| Wₛ -30°C [Nm] | 18 | 24 |
| MVI [ml/10³] | 32 | 16 |
| aₖ [kJ/m²] | 14 | 15 |
| CTE [10⁻⁶K^{-1]} | 86 | 76 |
| UL-94 | V-0 | V-0 |

## Patentansprüche

1. Formmassen, enthaltend
A) mindestens ein Polycarbonat,
B) mindestens ein Pfropfpolymerisat auf Basis eines Elastomeren mit einer Glasübergangstemperatur von unter 10°C,
C) mindestens ein Copolymerisat, enthaltend vinylaromatische Monomere,
D) mindestens einen Füllstoff,
sowie gewünschtenfalls darüberhinaus
E) mindestens ein Flammschutzmittel und
F) mindestens ein Additiv,
**dadurch gekennzeichnet, daß** die Formmassen
G) mindestens eine niedermolekulare halogenfreie Säure, ausgewählt aus der Gruppe Palmitinsäure, Stearinsäure, Benzoesäure, Isophthalsäure, Terephthalsäure, Trimellithsäure, para-Toluolsulfonsäure, Fumarsäure, Zitronensäure, Mandelsäure oder Weinsäure und darüberhinaus gewünschtenfalls
H) mindestens ein Polyalkylacrylat
und daß die Komponente D mindestens ein teilchenförmiger Füllstoff ist, von dem mindestens 95 Gew.-% aller Teilchen einen Durchmesser (größte Ausdehnung) von weniger als 45 µm aufweisen und deren Aspektverhältnis im Bereich von 2 bis 20 liegt.

2. Formmassen nach Anspruch 1, **dadurch gekennzeichnet, daß** die Komponente G ein Polymethylmethacrylat mit einem Molekulargewicht (Zahlenmittelwert M_{w}) von mindestens 1 000 000 g/mol ist.

3. Formmassen nach Anspruch 1 oder 2, **dadurch gekennzeichnet, daß** die Komponente H Zitronensäure oder p-Toluolsulfonsäure oder eine Mischung daraus ist.

4. Formmassen nach den Ansprüchen 1 bis 3, **dadurch gekennzeichnet, daß** die Anteile der Komponenten
G) 0,05 bis 2 Gew.-%, bezogen auf das Gesamtgewicht der Formmassen, und
H) 0,1 bis 10 Gew.-%, bezogen auf das Gesamtgewicht der Formmassen,
betragen.

5. Formmassen nach den Ansprüchen 1 bis 4, **dadurch gekennzeichnet, daß** die Komponente B oder C oder B und C Oxazolingruppen enthaltende Polymerisate sind.

6. Verwendung der Formmassen gemäß den Ansprüchen 1 bis 5 zur Herstellung von Formteilen, Folien oder Fasern.

7. Verwendung der Formmassen gemäß den Ansprüchen 1 bis 5 zur Herstellung großflächiger Formteile.

8. Verwendung der Formmassen gemäß den Ansprüchen 1 bis 5 zur Herstellung von Karosserieaußenteilen.

9. Formteile, erhältlich aus den Formmassen gemäß den Ansprüchen 1 bis 5.

## Claims

1. A molding composition comprising
A) at least one polycarbonate,
B) at least one graft polymer based on an elastomer with a glass transition temperature below 10°C,
C) at least one copolymer containing vinylaromatic monomers,
D) at least one filler,
and also, if desired, in addition to these
E) at least one flame retardant, and
F) at least one additive,
wherein the molding compositions comprise
G) at least one low-molecular-weight halogen-free acid, selected from the group consisting of palmitic acid, stearic acid, benzoic acid, isophthalic acid, terephthalic acid, trimellitic acid, para-toluenesulfonic acid, fumaric acid, citric acid, mandelic acid, or tartaric acid, and, in addition to these, if desired,
H) at least one polyalkyl acrylate,
and wherein component D is at least one particulate filler in which at least 95% by weight of all of the particles have a diameter of (largest dimension) below 45 µm, their aspect ratio being in the range from 2 to 20 µm.

2. A molding composition as claimed in claim 1, wherein component G is a polymethyl methacrylate with a molar (number-average M_{w}) of at least 1 000 000 g/mol.

3. A molding composition as claimed in claim 1 or 2, wherein component G is citric acid or p-toluene-sulfonic acid, or a mixture thereof.

4. A molding composition as claimed in any of claims 1 to 3, wherein the proportions of the components are
G) from 0.05 to 2% by weight, based on the total weight of the molding compositions, and
H) from 0.1 to 10% by weight, based on the total weight of the molding compositions.

5. A molding composition as claimed in any of claims 1 to 4, wherein component B or C, or B and C are polymers containing oxazoline groups.

6. The use of the molding composition as claimed in any of claims 1 to 5 for producing moldings, films, or fibers.

7. The use of the molding composition as claimed in any of claims 1 to 5 for producing large-surface-area moldings.

8. The use of the molding composition as claimed in any of claims 1 to 5 for producing external bodywork parts.

9. A molding obtainable from the molding composition as claimed in any of claims 1 to 5.

## Revendications

1. Masses de moulage, contenant
A) au moins un polycarbonate,
B) au moins un polymère greffé à base d'un élastomère ayant une température de transition vitreuse inférieure à 10°C,
C) au moins un copolymère, contenant des monomères vinyl-aromatiques,
D) au moins une charge,
ainsi qu'éventuellement, en outre,
E) au moins un agent ignifuge, et
F) au moins un additif,
**caractérisées en ce que** les masses de moulage contiennent
G) au moins un acide exempt d'halogène, de faible poids moléculaire, choisi parmi le groupe de l'acide palmitique, de l'acide stéarique, de l'acide benzoïque, de l'acide isophtalique, de l'acide téréphtalique, de l'acide trimellitique, de l'acide para-toluènesulfonique, de l'acide fumarique, de l'acide citrique, de l'acide mandélique ou de l'acide tartrique, et en outre éventuellement
H) un polyacrylate d'alkyle,
et **en ce que** le composant D est au moins une charge sous forme de particules, dont au moins 95% en poids de toutes les particules présentent un diamètre (extension la plus grande) inférieur à 45 µm et dont les propriétés d'aspect sont de l'ordre de 2 à 20.

2. Masses de moulage suivant la revendication 1, **caractérisées en ce que** le composant G est un polyméthacrylate de méthyle ayant un poids moléculaire (valeur moyenne numérique M_{w}) d'au moins 1.000.000 g/mole.

3. Masses de moulage suivant l'une des revendications 1 et 2, **caractérisées en ce que** le composant H est de l'acide citrique ou de l'acide p-toluènesulfonique ou un mélange de ces derniers.

4. Masses de moulage suivant l'une des revendications 1 à 3, **caractérisées en ce que** les fractions des composants s'élèvent à
G) 0,05 à 2% en poids par rapport au poids total de la masse de moulage, et
H) 0,1 à 10% en poids, par rapport au poids total de la masse de moulage.

5. Masses de moulage suivant l'une des revendications 1 à 4, **caractérisées en ce que** les composants B ou C ou B et C sont des polymères contenant des groupes oxazoline.

6. Utilisation des masses de moulage suivant l'une des revendications 1 à 5, pour la fabrication de pièces façonnées, de feuilles ou de fibres.

7. Utilisation des masses de moulage suivant l'une des revendications 1 à 5, pour la fabrication de pièces façonnées de grande surface.

8. Utilisation des masses de moulage suivant l'une des revendications 1 à 5, pour la fabrication de pièces extérieures de carrosseries.

9. Pièces façonnées, que l'on peut obtenir à partir des masses de moulage suivant l'une des revendications 1 à 5.
